# EUROPEAN PATENT SPECIFICATION

(11) **EP 3 228 059 B1**
(45) Date of publication and mention of the grant of the patent: **23.05.2018**
(21) Application number: 14907529.3
(22) Date of filing: 04.12.2014
(51) Int. Cl.: H04L 9/08, H04L 12/46, H04L 29/08, H04L 29/06

(54) **SECURE CONNECTIONS ESTABLISHMENT**
SICHERER VERBINDUNGSAUFBAU
ÉTABLISSEMENT DES CONNEXIONS SÉCURISÉES

(43) Date of publication of application: 11.10.2017
(73) Proprietor: Telefonaktiebolaget LM Ericsson (publ), 164 83 Stockholm (SE)
(72) Inventor: SETHI, Mohit, FI-02230 Espoo (FI); SALMELA, Patrik, FI-02230 Espoo (FI)
(74) Representative: Ericsson
(86) International application number: PCT/SE2014/051453
(87) International publication number: WO 2016/089267

(56) References cited:
- EP-A1- 2 533 466
- EP-A2- 2 375 798
- WO-A1-2005/018168
- WO-A2-2005/069864
- WO-A2-2010/057130
- US-A1- 2006 262 778
- US-A1- 2011 252 230

## Description

### TECHNICAL FIELD

Embodiments presented herein relate to establishing a secure connection, and particularly to methods, an access point, a network gateway, a client device, computer programs, and a computer program product for establishing a secure connection between a client device and a network gateway.

### BACKGROUND

In communications networks, there may be a challenge to obtain good performance for a given communications protocol, its parameters and the physical environment in which the communications network is deployed.

For example, one parameter in providing good performance in a communications network is the ability to provide secure connections from a client device to the communications network.

In general terms, small and growing enterprises, in which several client devices are located, may need their own information technology infrastructure to be able to operate, for example to enable the client devices to communicate with each other, as well as for the client devices to communicate with other entities in, or operatively connected to, a communications network. However, resources and time needed for setting up and maintaining such an information technology infrastructure might be quite high. Also, for growing enterprises, where the number of client devices is increasing, their information technology infrastructure needs to be updated frequently to cope with the varying demand on it. To cope with this, one alternative studied is the use of so-called virtual customer premises equipment (vCPE). By means of vCPEs the information technology infrastructure may be performed by means of cloud computing, i.e. virtualized. The enterprise may then be provided with a virtual customer premises equipment which acts as an interface to the cloud computing information technology infrastructure. This enables flexibility and dynamics with respect to the required information technology infrastructure.

The client devices are thereby operatively connected to a network gateway of the cloud computing information technology infrastructure by the vCPE. Since the client devices may exchange sensitive information with the cloud computing information technology infrastructure the connection between the client device and the gateway network should be secure.

Related art within this technical field is disclosed e.g. in US 2011/0252230, which describes a client device securely accessing a private network. A first network tunnel is established from the client device to the gateway to a public network, and a second tunnel is established from the client device to a gateway of the private network. Further, US 2006/0262778 describes a mobile device performing cellular and non-cellular mobile access, using a direct tunneling connection to a packet gateway node for the non-cellular access, and WO 2005/018168 describes how to establish ad Virtual Private Network tunnel connection between a first and a second computer connected to the Internet.

Hence, there is a need for enabling secure connection between a client device and a network gateway.

### SUMMARY

An object of embodiments herein is to provide a secure connection between a client device and a network gateway.

According to a first aspect there is presented a method for establishing a secure connection between a client device and a network gateway. The method, as defined in claim 1, is performed by an access point. The method comprises establishing a first secure connection between the access point and the network gateway. The method comprises establishing a second secure connection serving as a virtual private network tunnel between the client device and the network gateway.

Advantageously, this provides a secure connection between a client device and a network gateway. Thus, this enables end-to-end security between a client device and a cloud computing information technology infrastructure. Advantageously, this may reduce unnecessary encryption/decryption operations, thereby improving throughput performance.

Advantageously, this may allow separate security associations between the access point and the network gateway, as well as end-to-end between the client device and the network gateway.

According to a second aspect, as defined in claim 8, there is presented an access point for establishing a secure connection between a client device and a network gateway. The access point comprises a processing unit. The processing unit is configured to establish a first secure connection between the access point and the network gateway. The processing unit is configured to establish a second secure connection serving as a virtual private network tunnel between the client device and the network gateway.

According to a third aspect there is presented a method for establishing a secure connection between a client device and a network gateway. The method, as defined in claim 4, is performed by the network gateway. The method comprises establishing a first secure connection between the access point and the network gateway. The method comprises establishing a second secure connection with the access point to serve as a virtual private network tunnel between the client device and the network gateway.

According to a fourth aspect, as defined in claim 9, there is presented a network gateway for establishing a secure connection between a client device and the network gateway. The network gateway comprises a processing unit. The processing unit is configured to establish a first secure connection between the access point and the network gateway. The processing unit is configured to establish a second secure connection with the access point to serve as a virtual private network tunnel between the client device and the network gateway.

It is to be noted that any feature of the first, second, third, fourth, aspects maybe applied to any other aspect, wherever appropriate. Likewise, any advantage of the first aspect may equally apply to the second, third, fourth, aspect, respectively, and vice versa. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram illustrating a communication network according to embodiments;
Figs. 2, 3, 4, and 5 are schematic diagrams illustrating parts of a communication network according to embodiments;
Fig. 6a is a schematic diagram showing functional units of an access point according to an embodiment;
Fig. 6b is a schematic diagram showing functional modules of an access point according to an embodiment;
Fig. 7a is a schematic diagram showing functional units of a network gateway according to an embodiment;
Fig. 7b is a schematic diagram showing functional modules of a network gateway according to an embodiment;
Fig. 8a is a schematic diagram showing functional units of a client device according to an embodiment;
Fig. 8b is a schematic diagram showing functional modules of a client device according to an embodiment;
Fig. 9 shows one example of a computer program product comprising computer readable means according to an embodiment;
Figs. 10, 11, 12, 13, 14, and 15 are flowcharts of methods according to embodiments; and
Figs. 16 and 17 are signalling diagrams of methods according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

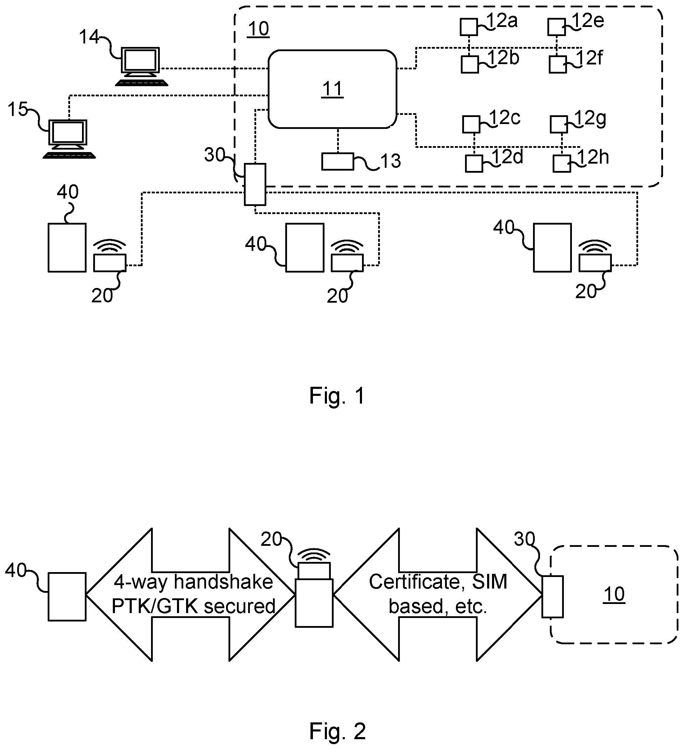

Fig. 1 is a schematic diagram illustrating a communications network where embodiments presented herein can be applied.

The communications network comprises access points 20. In general terms, each access point 20 may be provided in a customer premises equipment (CPE) and thus define a virtual customer premises equipment (vCPE). The access point 20 maybe configured for wireless and/or wireline communication. Each access point 20 may refer to a device such as a telephone, a router, a switch, a residential gateway (RG), a set-top box, a fixed mobile convergence product, a home networking adaptor, or an internet access gateway, that generally enable client devices 40 to access services as provided by a cloud computing information technology infrastructure 10 (hereinafter denoted cloud infrastructure 10 for short). The access points 20 may thus interface a local client network at different enterprise sites, as represented by the client devices 40, with the central cloud infrastructure 10.

The communications network not only provides the flexibility of the cloud infrastructure 10 to scale up or down based on the resource requirements, but also provides a uniform network environment across different sites where client devices 40 may be located. This also allows the client devices 40 to have access to the same network environment in remote locations.

The cloud infrastructure 10 may host entities and functions relating to firewalls, Dynamic Host Configuration Protocol (DHCP) servers, network address translators (NATs), etc. and be operatively connected to network management stations 14, and portals 15.

A central controller 11 in the central cloud infrastructure 10 is responsible for instantiating virtual machines, configuring and controlling network segments, as well as adding new network elements such as routers/bridges to the cloud infrastructure 10. The controller 11 may be a software-defined networking (SDN) controller. The controller 11 thereby has the full view of the cloud infrastructure 10 and based on administrator configured policies, it can enforce policies based on a per user, application, or device basis.

The controller 11 may be operatively connected to a number of functions 12a-h in the cloud infrastructure 10, such as dashboards 12a, SLA managers 12b, lifecycle management 12c, performance monitoring 12d, service chaining 12e, location optimizers 12f, connecting monitors 12g, and network configurators 12h.

The controller 11 is operatively connected to an authentication server 13. The authentication server 11 may provide a network service that applications use to authenticate credentials, such as account names and passwords, of their users. Thus, when a client device 40 submits a valid set of credentials, it may from the authentication server 13 receive a cryptographic ticket that the client device 40 may subsequently use to access various services of the cloud infrastructure 10. Particular details of the functionality of the authentication server 13 will be provided below.

The network gateway 30 would be the first point of contact in the cloud infrastructure 10 for the access point 20. The access point 20 may authenticate itself to the cloud infrastructure 10 and maintain a secure association with the network gateway 30. Client devices 40 which should access the cloud infrastructure 10 may be required to authenticate themselves before they may obtain access to the cloud infrastructure 10 and its services through the access point 20.

As noted above, the access points 20 may enable client devices 40 to connect to the central cloud infrastructure 10 either through a wireless connection or a wireline connection. However, existing wired networks typically do not perform any access authentication or perform a rudimentary access authentication based on the media access control (MAC) address of the client device 40. Wireless networks, on the other hand, typically rely on Wi-Fi Protected Access II pre-shared key mode (WPA2-PSK) for authenticating client devices 40 and creating security associations. WPA2-PSK relies on a common shared secret between the access point 20 and the connecting client devices 40. Some wireless based networks may also use WPA2-Enterprise with 802.1X (so called Extensible Authentication Protocol, EAP, over local area network, EAPOL) based authentication and secure connection establishment. An access point 20 that uses WPA2-Enterprise relies on an external trusted authentication server for authenticating client devices 40 and establishing security associations. While EAP access authentication is typically used for wireless networks, it can nevertheless be used over wired networks as well.

A brief description of WPA2-Enterprise access authentication is provided next. A connecting client device 40 discovers the access point 20 based on beacons/probes and the client device 40 and the access point 20 negotiate security capabilities and establish an 802.11 channel. The connecting client device 40 on discovering that the access point 20 requires WPA2 Enterprise authentication, sends and EAPOL-Start message. The access point 20 then requests the identity of the client device 40 with an EAP-Request/Identity message.

The client device 40 sends an EAP-Response message containing its identity. The access point 20 on receiving this identity decapsulates it from the EAP message and encapsulates it in a Radius/Diameter message that is then sent to the network gateway 30 which forwards the message to the authentication server 13 (Radius/Diameter server). Then, based on the EAP authentication method used, further request responses may be sent between the client device 40 and the authentication server 13 which are encapsulated and decapsulated by the access point 20 in-between. A successful authentication typically results in the derivation of keying material between the client device 40 and the authentication server 13. This key is referred to as the Master key (MK).

The authentication server 13 indicates the successful authentication to the access point 20 through the network gateway 30 and also sends a Pairwise master Key (PMK) derived from the MK. The client device 40 also derives the PMK from the MK and uses it to perform a 4-way handshake with the access point 20 for negotiating WPA2 security. This results in a time-limited session key called Pairwise Transient Key protecting the unicast traffic and a Group-wise transient key for multicast traffic.

The access point 20 may authenticate itself to the cloud infrastructure 10 and establish a secure association with the network gateway 30 using certificates, SIM based authentication, raw public-keys, (pre-)shared keys, leap-of-faith etc.

Fig. 2 schematically illustrates an access point 20, a network gateway 30 of a cloud infrastructure 10 and a client device 40 according to a scenario where the above disclosed mechanisms for WPA2-Enterprise access authentication is applied. Thus, WPA2 Enterprise based security is used between the client device 40 at the enterprise site and the access point 20 on location. The access point 20 is responsible for decrypting all data received from the client device 40 and then sending it to the infrastructure cloud 10 over an encrypted tunnel with the network gateway 30. This essentially results in a hop-by-hop security. The herein disclosed embodiments ensure that the security association between any client device 40 and the cloud infrastructure 10 is not hop-by-hop, but rather end-to-end. This reduces the attack surface as otherwise the access point 20 could be a target for intercepting traffic between the client device 40 and the cloud infrastructure 10.

The embodiments disclosed herein particularly relate to enabling secure connection between a client device 40 and a network gateway 30. In order to obtain such secure connection there is provided methods, an access point 20, a network gateway 30, a client device 40, computer programs, and a computer program product for establishing a secure connection between the client device 40 and the network gateway 30 (and thus the authentication server 13).

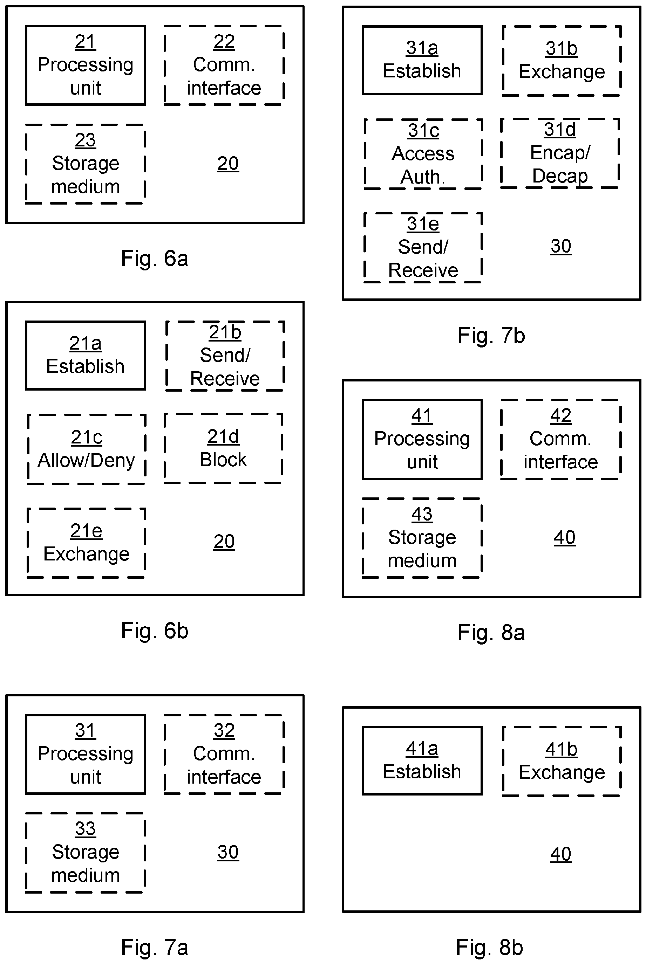

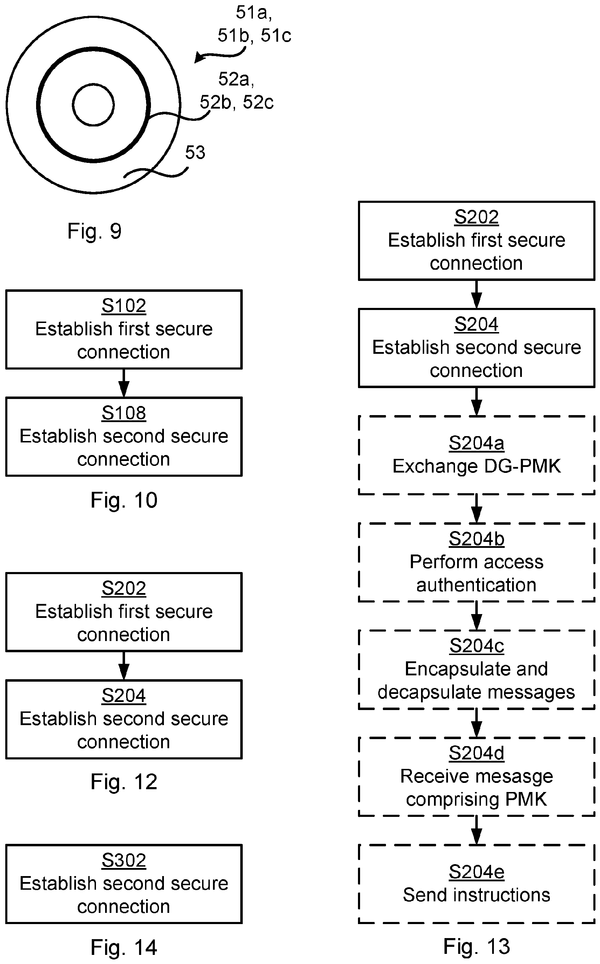

Fig. 6a schematically illustrates, in terms of a number of functional units, the components of an access point 20 according to an embodiment. A processing unit 21 is provided using any combination of one or more of a suitable central processing unit (CPU), multiprocessor, microcontroller, digital signal processor (DSP), application specific integrated circuit (ASIC), field programmable gate arrays (FPGA) etc., capable of executing software instructions stored in a computer program product 51a (as in Fig. 9), e.g. in the form of a storage medium 23. Thus the processing unit 21 is thereby arranged to execute methods as herein disclosed. The storage medium 23 may also comprise persistent storage, which, for example, can be any single one or combination of magnetic memory, optical memory, solid state memory or even remotely mounted memory. The access point 20 may further comprise a communications interface 22 for communications with at least one network gateway 30 and at least one client device 40. As such the communications interface 22 may comprise one or more transmitters and receivers, comprising analogue and digital components and a suitable number of antennas for wireless communications and/or ports for wireline communications. The processing unit 21 controls the general operation of the access point 20 e.g. by sending data and control signals to the communications interface 22 and the storage medium 23, by receiving data and reports from the communications interface 22, and by retrieving data and instructions from the storage medium 23. Other components, as well as the related functionality, of the access point 20 are omitted in order not to obscure the concepts presented herein. The access point 20 may be provided as a standalone device or as a part of a further device. For example, as noted above, the access point 20 may be provided in a customer premises equipment.

Fig. 6b schematically illustrates, in terms of a number of functional modules, the components of an access point 20 according to an embodiment. The access point 20 of Fig. 6b comprises a number of functional modules; such as an establish module 21a configured to perform below steps S102, S108, S108c, S114. The access point 20 of Fig. 6b may further comprises a number of optional functional modules, such as any of a send and/or receive module 21b configured to perform below steps S104, Sio8a, Sio8b, S108d, S108e, S108h, S110, an allow and/or deny module 21c configured to perform below step S106, a block module 21d configured to perform below step S112, and an exchange module 21e configured to perform below steps S108f, S108g. The functionality of each functional module 21a-e will be further disclosed below in the context of which the functional modules 21a-e may be used. In general terms, each functional module 21a-e may be implemented in hardware or in software. Preferably, one or more or all functional modules 21a-e may be implemented by the processing unit 21, possibly in cooperation with functional units 22 and/or 23. The processing unit 21 may thus be arranged to from the storage medium 23 fetch instructions as provided by a functional module 21a-e and to execute these instructions, thereby performing any steps as will be disclosed hereinafter.

Fig. 7a schematically illustrates, in terms of a number of functional units, the components of a network gateway 30 according to an embodiment. A processing unit 31 is provided using any combination of one or more of a suitable central processing unit (CPU), multiprocessor, microcontroller, digital signal processor (DSP), application specific integrated circuit (ASIC), field programmable gate arrays (FPGA) etc., capable of executing software instructions stored in a computer program product 51b (as in Fig. 9), e.g. in the form of a storage medium 33. Thus the processing unit 31 is thereby arranged to execute methods as herein disclosed. The storage medium 33 may also comprise persistent storage, which, for example, can be any single one or combination of magnetic memory, optical memory, solid state memory or even remotely mounted memory. The network gateway 30 may further comprise a communications interface 32 for communications with at least one access point 20 and a controller 11. As such the communications interface 32 may comprise one or more transmitters and receivers, comprising analogue and digital components and a suitable number of antennas for wireless communications and/or ports for wireline communications. The processing unit 31 controls the general operation of the network gateway 30 e.g. by sending data and control signals to the communications interface 32 and the storage medium 33, by receiving data and reports from the communications interface 32, and by retrieving data and instructions from the storage medium 33. Other components, as well as the related functionality, of the network gateway 30 are omitted in order not to obscure the concepts presented herein.

Fig. 7b schematically illustrates, in terms of a number of functional modules, the components of a network gateway 30 according to an embodiment. The network gateway 30 of Fig. 7b comprises a number of functional modules; such as an establish module 31a configured to perform below steps S202, S204. The network gateway 30 of Fig. 7b may further comprises a number of optional functional modules, such as any of an exchange module 31b configured to perform below step S204a, an access authentication module 31c configured to perform below step S204b, an encapsulate and/or decapsulate module 31d configured to perform below step S204c, and a send and/or receive module 31e configured to perform below steps S204d, S204e. The functionality of each functional module 31a-e will be further disclosed below in the context of which the functional modules 31a-e may be used. In general terms, each functional module 31a-e may be implemented in hardware or in software. Preferably, one or more or all functional modules 31a-e may be implemented by the processing unit 31, possibly in cooperation with functional units 32 and/or 33. The processing unit 31 may thus be arranged to from the storage medium 33 fetch instructions as provided by a functional module 31a-e and to execute these instructions, thereby performing any steps as will be disclosed hereinafter.

Fig. 8a schematically illustrates, in terms of a number of functional units, the components of a client device 40 according to an embodiment. A processing unit 41 is provided using any combination of one or more of a suitable central processing unit (CPU), multiprocessor, microcontroller, digital signal processor (DSP), application specific integrated circuit (ASIC), field programmable gate arrays (FPGA) etc., capable of executing software instructions stored in a computer program product 51c (as in Fig. 9), e.g. in the form of a storage medium 43. Thus the processing unit 41 is thereby arranged to execute methods as herein disclosed. The storage medium 43 may also comprise persistent storage, which, for example, can be any single one or combination of magnetic memory, optical memory, solid state memory or even remotely mounted memory. The client device 40 may further comprise a communications interface 42 for communications with at least one access point 20. As such the communications interface 42 may comprise one or more transmitters and receivers, comprising analogue and digital components and a suitable number of antennas for wireless communications and/or ports for wireline communications. The processing unit 41 controls the general operation of the client device 40 e.g. by sending data and control signals to the communications interface 42 and the storage medium 43, by receiving data and reports from the communications interface 42, and by retrieving data and instructions from the storage medium 43. Other components, as well as the related functionality, of the client device 40 are omitted in order not to obscure the concepts presented herein.

Fig. 8b schematically illustrates, in terms of a number of functional modules, the components of a client device 40 according to an embodiment. The client device 40 of Fig. 8b comprises a number of functional modules; such as an establish module 41a configured to perform below step S302. The client device 40 of Fig. 8b may further comprises a number of optional functional modules, such as an exchange module 41b configured to perform below step S302a. The functionality of each functional module 41a-c will be further disclosed below in the context of which the functional modules 41a-c may be used. In general terms, each functional module 41a-c may be implemented in hardware or in software. Preferably, one or more or all functional modules 41a-c may be implemented by the processing unit 41, possibly in cooperation with functional units 42 and/or 43. The processing unit 41 may thus be arranged to from the storage medium 43 fetch instructions as provided by a functional module 41a-c and to execute these instructions, thereby performing any steps as will be disclosed hereinafter.

Fig. 9 shows one example of a computer program product 51a, 51b, 51c comprising computer readable means 53. On this computer readable means 53, a computer program 52a can be stored, which computer program 52a can cause the processing unit 21 and thereto operatively coupled entities and devices, such as the communications interface 22 and the storage medium 23, to execute methods according to embodiments described herein. On this computer readable means 53, a computer program 52b can be stored, which computer program 52b can cause the processing unit 31 and thereto operatively coupled entities and devices, such as the communications interface 32 and the storage medium 33, to execute methods according to embodiments described herein. On this computer readable means 53, a computer program 52c can be stored, which computer program 52c can cause the processing unit 41 and thereto operatively coupled entities and devices, such as the communications interface 42 and the storage medium 43, to execute methods according to embodiments described herein. The computer programs 52a, 52b, 52c and/or the computer program products 51a, 51b, 51c may thus provide means for performing any steps as herein disclosed.

In the example of Fig. 9, the computer program product 51a, 51b, 51c is illustrated as an optical disc, such as a CD (compact disc) or a DVD (digital versatile disc) or a Blu-Ray disc. The computer program product 51a, 51b, 51c could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 52a, 52b, 52c is here schematically shown as a track on the depicted optical disk, the computer program 52a, 52b, 52c can be stored in any way which is suitable for the computer program product 51a, 51b, 51c.

Reference is now made to Fig. 10 illustrating a method for establishing a secure connection between a client device 40 and a network gateway 30 as performed by an access point 20 according to an embodiment.

The access point 20 is configured to take part in establishment of (at least) two secure connections; a first secure connection between the access point 20 and the network gateway 30, and a second secure connection between the client device 40 and the network gateway 30. Particularly, the access point 20 is configured to in a step S102 establish a first secure connection between the access point 20 and the network gateway 30. The access point 20 is configured to in a step S108 establish a second secure connection serving as a virtual private network (VPN) tunnel between the client device 40 and the network gateway 30.

Thereby, a secure connection is established between the client device 40 and the network gateway 30 with the help of the access point 20. In this respect, it to the client device 40 appears as if the second secure connection is set up to the access point 20, not the network gateway 30. Normally, if setting up a secure connection to a network gateway 30, the access point 20 would not be involved other than for routing/forwarding packets and the VPN setup would be done after access authentication. In contrast, as herein disclosed, the VPN setup is performed as part of the access authentication.

Reference is now made to Fig. 11 illustrating methods for establishing a secure connection between a client device 40 and a network gateway 30 as performed by an access point 20 according to further embodiments.

Embodiments relating to further details of the first secure connection will now be disclosed.

Establishing the first secure connection may be based on certificates, subscriber identity module (SIM) based authentication, policies set by a service provider of the access point 20, raw public-keys, (pre-)shared keys, leap-of-faith, etc.

The first secure connection may define a separate control channel between the access point 20 and the network gateway 30. The access point 20 may be configured to in an optional step S104 receive and send software-defined networking (SDN) control signalling for the access point 20 on the separate control channel. The network access point 20 may further be configured to in an optional step S106 selectively allow or deny traffic of the client device 40 based on the SDN control signalling.

Embodiments relating to further details of the second secure connection will now be disclosed.

There may be different ways of establishing the second secure connection. For example, the access point 20 may be configured to in an optional step S108a establish the second secure connection by receiving an access requestfrom the client device 40. The access point 20 may then be configured to in an optional step S108b forward the access requestto the network gateway 30. Additionally or alternatively the access point 20 may be configured to in an optional step S108c establish the second secure connection by facilitating establishment of an Extensible Authentication Protocol (EAP) access authentication between the client device 40 and the network gateway 30. The access point 20 may, for example, be configured to in an optional step S108d establish the EAP access authentication by receiving a shared pairwise master key (PMK) from the network gateway 30. In general terms, the authentication server 13 and the client device 40 may both generate the PMK. The authentication server then gives the PMK to the network gateway 30. Now the network gateway 30 and the client device 40 have a shared secret, the PMK, which can be used for setting up, for example, WiFi security in a 4-way handshake. In a first case (actual VPN used with DG-PMK) the PMK is given from the authentication server 13 to the access point 20, passed through the network gateway 30. In second and third cases the PMK is only given to the network gateway 30. These three cases will be further disclosed below with reference to collective embodiments relating to the access point 20, the network gateway 30 and the client device 40.

The access point 20 may further be configured to in an optional step S108e provide the client device 40 with a network address to the network gateway 30. The access point 20 may further be configured to in an optional step S108f establish the second secure connection by facilitating exchange of a device-to-gateway pairwise master key (DG-PMK) between the client device 40 and the network gateway 30. In this respect, the DG-PMK may be generated by the authentication server 13 and the client device 40, and then communicated from the authentication server 13 to the network gateway 30. The connection between the client device 40 and the network gateway 30 may be secured/protected using the DG-PMK. The DG-PMK may be determined using a key derivation function (KDF) and a master key (MK).

Establishing the second secure connection may comprise receiving and forwarding messages between the client device 40 and the network gateway 30. The method according to claim 1, The access point 20 may further be configured to in an optional step S108g establish the second secure connection by facilitating a 4-way handshake between the client device 40 and the network gateway 30. The method according to claim 8 and 13, The access point 20 may be configured to in an optional step S108h facilitate the 4-way handshake by receiving and forwarding parameters of a pairwise transient key (PTK), or a group temporal key (GTK), from and to the client device 40 and the network gateway 30. The PTK or GTK may be based on the PMK.

The access point 20 maybe configured to in an optional step S110, after having established the second secure connection, receive and forward encrypted packets between the client device 40 and the network gateway 20 over the second secure connection. Hence, the access point 20 may act as a relay between the client device 40 and the network gateway 30.

The access point 20 may block non-encrypted packets. That is, the access point 20 may be configured to in an optional step S112, after having established the second secure connection, block reception and forward of non-encrypted packets from and to the client device 40 and the network gateway 30 on the second secure connection.

Establishing the first secure connection may be performed prior to establishing the second secure connection. That is, step S102 may be performed before step S104. Establishment of the first secure connection may be performed upon power up of the access point 20.

Embodiments relating to details of a third secure connection will now be disclosed.

The third secure connection may be a separate secure connection between the access point 20 and the client device 40. Thus, the access point 20 may be configured to in an optional step S114 establish a third secure connection between the access point and the client device.

Establishing the third secure connection may be performed prior to establishing the second secure connection. That is, step S114 may be performed before step S104.

Reference is now made to Fig. 12 illustrating a method for establishing a secure connection between a client device 40 and a network gateway 30 as performed by the network gateway 30 according to an embodiment.

As noted above, a first secure connection is established between the access point 20 and the network gateway 30, and a second secure connection is established between the client device 40 and the network gateway 30. The network gateway 30 is therefore configured to in a step S202 establish a first secure connection between the access point 20 and the network gateway 30. The network gateway 30 is further configured to in a step S204 establish a second secure connection with the access point 20 to serve as a virtual private network tunnel between the client device 40 and the network gateway 30.

Reference is now made to Fig. 13 illustrating methods for establishing a secure connection between a client device 40 and a network gateway 30 as performed by the network gateway 30 according to further embodiments.

Embodiments relating to further details of the second secure connection will now be disclosed.

As noted above, the access point 20 may be configured to facilitate exchange of a device-to-gateway pairwise master key (DG-PMK) between the client device 40 and the network gateway 30. Hence, the network gateway 30 may be configured to in an optional step S204a establish the second secure connection by exchanging the DG-PMK with the client device 40 via the access point 30. As noted above, the DG-PMK may be determined using a key derivation function (KDF) and a master key (MK).

The network gateway 30 may perform access authentication functions of the access point 20 and send an EAP-Request/Identity message for the client device 40. Particularly, the network gateway 30 may be configured to in an optional step S204b establish the second secure connection by performing access authentication for the client device 40 on behalf of the access point 20 by sending an EAP-Request/Identity message to the client device via the access point 20.

There may be different ways to perform the access authentication for the client device 40. For example, the network gateway 30 may be configured to in an optional step S204c perform the access authentication by encapsulating and decapsulating EAP-Request/Response messages to Remote Authentication Dial In User Service (RADIUS) messages and/or Diameter Access-Request and Access-Challenge messages on behalf of the access point 20, and communicate the messages with an authentication server 13.

On successful authentication, the radius/Diameter server may send a Radius/Diameter Access-Accept message with the PMK to the network gateway 30. The network gateway 30 may thus be configured to in an optional step S204d perform the access authentication by receiving a RADIUS/Diameter Access-Accept message comprising a pairwise master key (PMK) from the authentication server 13 on behalf of the access point 20.

The controller 11 may then, by means of the network gateway 30, instruct the access point 20 to add the client device 40 to a white-list and forward all encrypted packets to the network gateway 30. Thus, the network gateway 30 may be configured to in an optional step S204e establish the second secure connection by sending instructions to the access point to add the client device 40 to a white-list and to forward all encrypted packets between the client device 40 and the network gateway 30.

Reference is now made to Fig. 14 illustrating a method for establishing a secure connection between a client device 40 and a network gateway 30, as performed by the client device 40 according to an embodiment.

Again, as noted above, a first secure connection is established between the access point 20 and the network gateway 30, and a second secure connection is established between the client device 40 and the network gateway 30. The client device 40 is configured to in a step S302 establish a second secure connection with the access point 20 to serve as a virtual private network tunnel between the client device 20 and the network gateway 30.

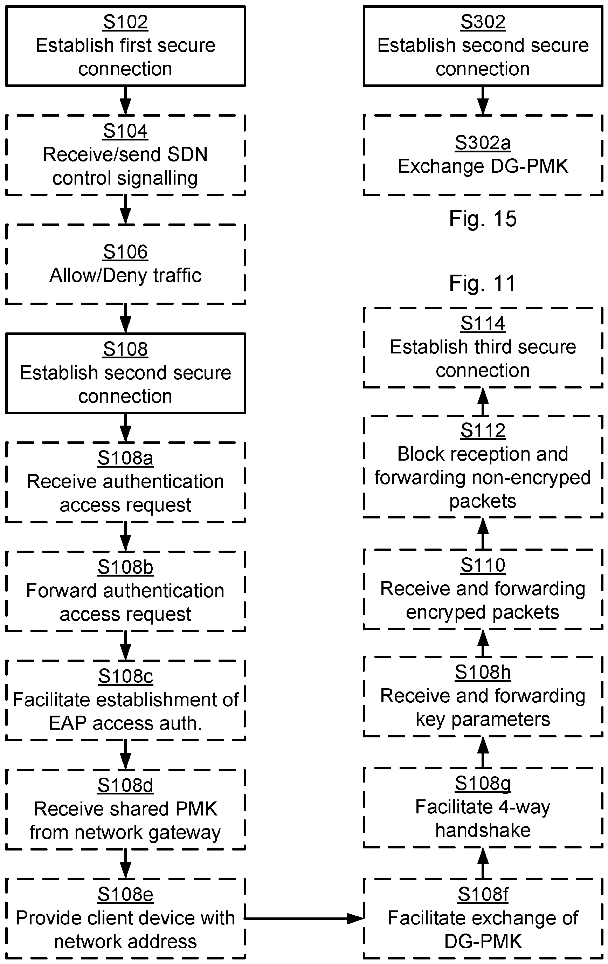

Reference is now made to Fig. 15 illustrating methods for establishing a secure connection between a client device 40 and a network gateway 30, as performed by the client device 40 according to further embodiments.

Embodiments relating to further details of the second secure connection will now be disclosed.

As noted above, a device-to-gateway pairwise master key (DG-PMK) may be exchanged between the client device 40 and the network gateway 30. Hence, the client device 40 may be configured to in an optional step S302a establish the second secure connection by exchanging a device-to-gateway pairwise master key (DG-PMK) with the network gateway 30 via the access point 20. In general terms, the DG-PMK may only be used for scenarios based on using an explicit VPN tunnel between the client device 40 and the network gateway 30. In other scenarios the network gateway 30 may acquire a regular PMK which is used as basis for WPA security, Wired Equivalent Privacy (WEP) security, etc. being examples of security employed between the client device 40 and the access point 20 (or network gateway 30). In such scenarios, at least when WPA is used, the access point 20 forwards the 4-way key exchange between the client device 40 and the network gateway 30 to establish the security, which may be terminated at the network gateway 30, not at the access point 20. When DG-PMK is used, the authentication server 13 generates both a PMK and a DG-PMK. The PMK may then be used between the access point 20 and the client device 40 for WPA/WEP (etc.) and the DG-PMK may then be used for the explicit VPN tunnel. The explicit VPN tunnel may require that the client device 40 learns the IP address of the network gateway 30 from a default network gateway field of the DHCP message and then explicitly configures a VPN tunnel to that IP address using the separately generated DG-PMK key. However, the client device 40 may just use the PMK for WPA/WEP (etc.) as for a regular access point 20, but the endpoint is actually at the network gateway 30. If the DG-PMK approach is not used, PMK may be used for WPA to the network gateway 30. In general terms, DG-PMK may be used for securing the connection between the client device 40 and the network gateway 30 and PMK may be used for securing the connection between the client device 40 and the access point 20.

The client device 40 may re-use an EAP identity when establishing the secure tunnel with the network gateway 30 to identify which DG-PMK the network gateway 30 should use. That is, the client device 40 may be configured to in an optional step S302b establish the second secure connection by performing access authentication with the access point 20 by receiving an EAP-Request/Identity message from the access point 20, wherein the message has been sent from the network gateway 30.

Three particular embodiments relating to the above general embodiments will now be disclosed in detail.

As disclosed above, when the access point 20 is switched on, it may establish a security association with the network gateway 30. This may require strong authentication and may be performed with SIM-based credentials, certificates, raw public-keys, (pre-)shared keys, leap-of-faith, etc. The exact mechanism used for this strong authentication and security association establishment may depend on the policies set by the access point 20 solution provider. However, the herein disclosed embodiments do not rely on the use of specific credentials or authentication mechanism for this.

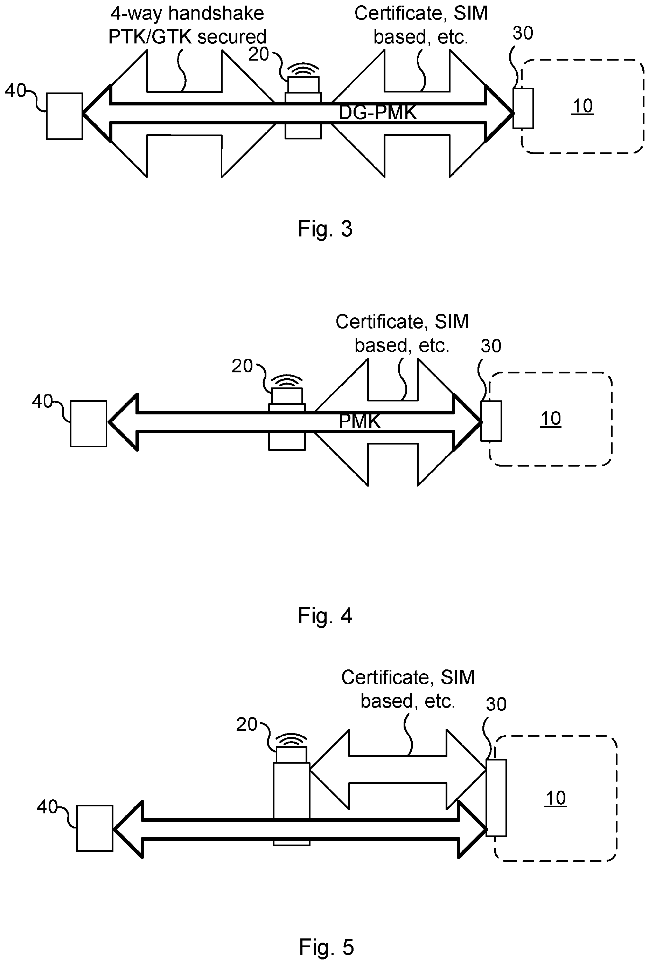

As illustrated in Fig. 3, EAP based authentication is used for authenticating the user device 40. This means that user credentials in the form of client certificates or passwords/shared secrets (depending on the EAP method used) need to be added to the RADIUS/Diameter Authentication server 11.

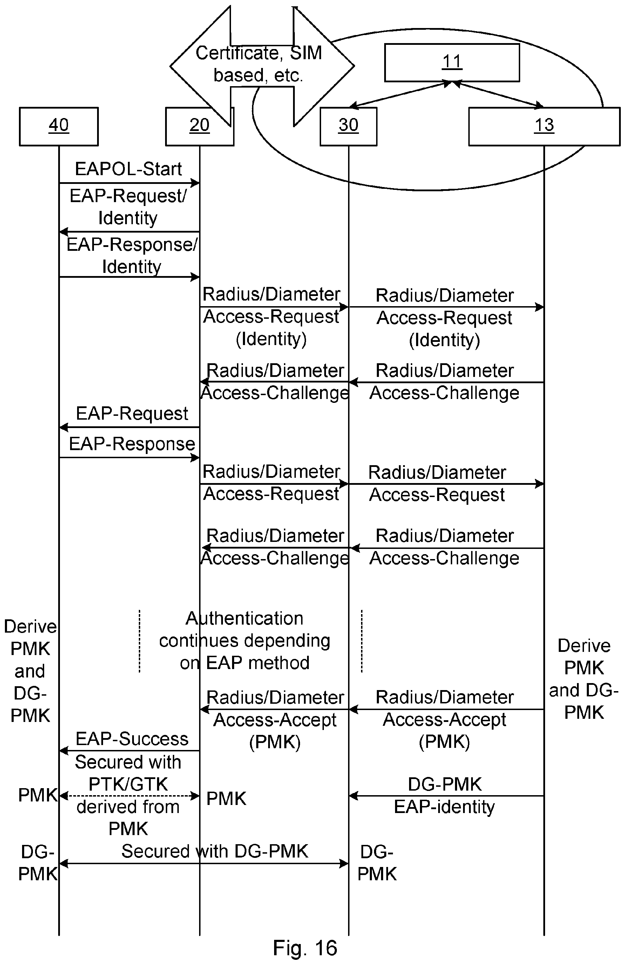

As illustrated in the signalling diagram of Fig. 16, after an EAP based authentication round completes, both the client device 11 and the authentication server have a shared key, PMK. The Radius/Diameter Authentication server delivers the PMK to the access point 20. As disclosed above, this PMK is then used in the 4-way handshake to derive the PTK/GTK which protects the link between the client device 40 and the access point 20. However, in addition to deriving the PMK, now, both the client device 40 and the RADIUS/Diameter authentication server also derive the DG-PMK from the MK. The DG-PMK is derived using a KDF and the MK. KDF may be based on using a keyed hash with the MK over mutually agreed data. This data may be negotiated in the EAP handshake or could be the actual EAP identity of the client device 40). The RADIUS/Diameter authentication server, after successful authentication, also communicates the EAP identity and the DG-PMK to the network gateway 30. Similar to the key PMK, the DG-PMK may also be time-limited and may be re-negotiated after the key lifetime expires using another EAP authentication round.

Therefore, the client device 40, in addition to the PMK, has another shared secret DG-PMK that is shared with the network gateway 30. This shared secret may be used for establishing an end-to-end secure tunnel between the client device 40 and the network gateway 30 that may be protected inside previously used hop-by-hop tunnels .For example, the client device 40 may receive the address of the network gateway 30 as part of initial network configuration information from the access point 20. The access point 20 may include the address of the network gateway 30 as the default gateway address. The client device 40 may then use the DG-PMK and the gateway address received to establish the secure tunnel to the central cloud infrastructure 10). The client device 40 may re-use the EAP identity when establishing the secure tunnel with the network gateway 30 to identify which DG-PMK the network gateway 30 should use. The network gateway 30 receives the identity/DG-PMK mapping from the Authentication server. Using this method, the client device 40 or the network gateway 30 does not need to perform additional authentication or security negotiations using certificates or passwords for achieving end-to-end security. The EAP authentication and key negotiation is thus extended to provide network access authentication and end-to-end security association establishment in a single round.

However, as is evident, this end-to-end security makes the PTK/GTK based secure tunnel between the client device 40 and the access point 20 at least appear to be redundant. This method may also require modifications to the wpa_supplicant daemon (EAP client) residing in the client device 40 and the hostapd daemon (EAP server) residing in the Authentication server.

A modification of the embodiment illustrated in Figs. 3 and 16 is therefore proposed. Accordingly, the functionality of the access point 20 may be regarded as split into two, whereby the radio/Ethernet packet forwarding functionality is located in the access point 20 whilst the network access security is handled by the central cloud infrastructure 10. This is illustrated in Fig. 4 and Fig. 5.

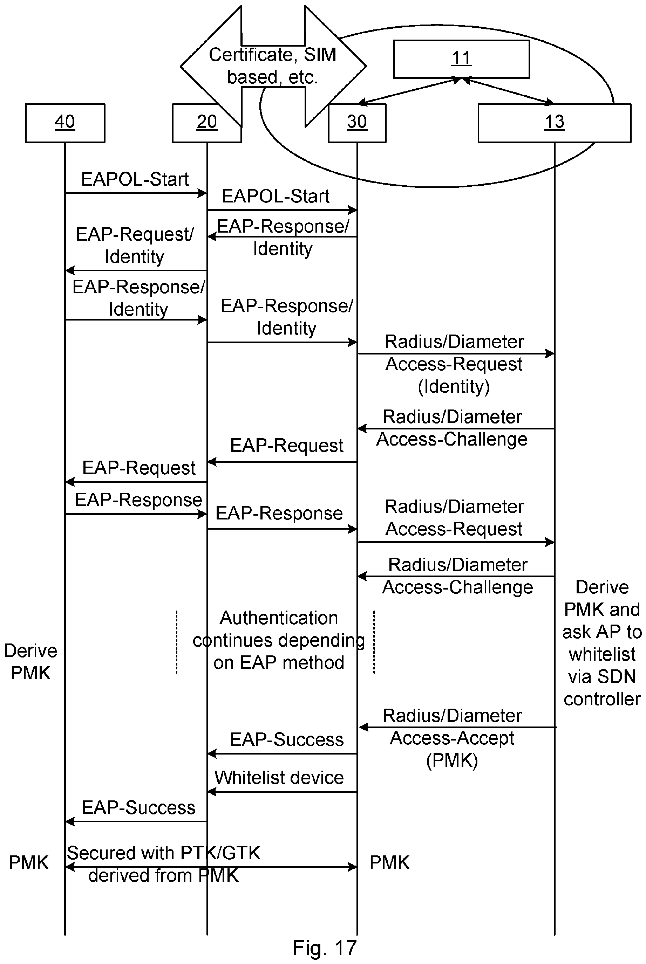

According to such an embodiment the authentication request would be initiated by the client device 40, as shown in the signalling diagram of Fig. 17. The access point 20 may record this authentication request and may forward the request to the network gateway 30. The network gateway 30 may now perform the access authentication functions of the access point 20 and may send an EAP-Request/Identity message towards the client device 40. The access point 20 may thus act as a relay and forward this message to the requesting client device 40. Upon receiving the identity in the EAP-Response message from the client device 40, the access point 20 forwards it to the network gateway 30. The network gateway may now be responsible for encapsulating and decapsulating EAP-Request/Response messages to RADIUS/Diameter Access-Request and Access-Challenge messages and sending them to the authentication server. On successful authentication, the radius/Diameter server sends a Radius/Diameter Access-Accept message with the PMK to the network gateway 30. The client device 40 may then negotiate the PTK/GTK using the derived PMK and the 4-way handshake. To the client device 40 it will appear that this handshake is being performed with the access point 20. However, these packets would be forwarded by the access point 20 to the network gateway 30. The network gateway 30 may, on successfully completing the handshake, also instructs the access point 20 via the controller 11 to add this client device 40 to a white-list and forward all encrypted packets to the network gateway 30. From hereon, the client device 40 may send encrypted packets directly to the network gateway 30 whilst the access point 20 is only forwarding the encrypted packets. The PMK may be time-limited and may need to be re-negotiated. If however, the client device 40 fails to authenticate correctly or stops responding, the authentication server may send a notification to the controller 11 which would then instruct the access point 20 to blacklist the client device 40 for a certain time before allowing it to try and authenticate again.

In this way, all traffic from the client device 40 to the cloud infrastructure 10 is encrypted, and the access point 20 only has to perform basic access control and packet forwarding. According to this embodiment the client device 40 does not need to have any additional VPN, or other security software installed and configured, in order to have an end-to-end security to the network gateway 30.

From Fig. 4 and especially Fig. 5 it is evident that the client device 40 has a direct end-to-end secure connection with the network gateway 30. There is no redundant encryption and decryption at the client device 40 or the access point 20. The network access authentication also results in the establishment of security association, thereby reducing the need of separate handshakes. One difference between the embodiments shown in Fig. 4 and Fig. 5 is that the access point 20 in Fig. 5 is configured to have a separate control channel between itself and the network gateway 30. This control channel may provide segregation of control data exchanged (for example this channel might be used exclusively for SDN commands from the controller 11) and the data traffic between the client device 40 and the network gateway 30.

When the access point 20 is configured using SDN to allow the traffic of the authenticated client device 40, the client device 40 may be put into a list of accepted clients. The access point 20 may not be enabled to verify that the client device 40 is sending authorized packets (i.e. that the packets can be decrypted in the cloud infrastructure 10). Instead, it is the secure connection endpoint in the cloud infrastructure 10 that needs to take care of this. With this setup the access point 20 may further be configured to block all non-encrypted packets to protect against MAC spoofing. An attacker may thereby not send plaintext messages using the MAC address of the client device 40. Likewise, an attacker can not send valid encrypted messages with a spoofed MAC since the attacker does not know the key to use for encrypting the message and thus the secure connection endpoint in the cloud infrastructure 10 will not be able to decrypt the message either. The network gateway 30 may inform the access point 20 about such malicious behavior such that appropriate actions may be taken. This embodiment does not require any changes to be made to the client device 40.

In summary, at least some of the herein disclosed embodiments enables the functionality of the access point 20 to be split such that, for example, WPA2/WLAN security is established between the client device 40 and the network gateway 30 instead of between the client device 40 and the access point 20. This provides end-to-end security for the client device 40, in some embodiments without any modifications or configuration of the client device 40.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for establishing a secure connection between a client device (40) and a network gateway (30), the method being performed by an access point (20) provided in a customer premises equipment, the method comprising the steps of:
establishing (SI02) a first secure connection between the access point and the network gateway;
defining a separate control channel between the access point and the network gateway;
receiving and sending (S104) software-defined networking, SDN, control signalling for the access point on the separate control channel, and
establishing (S108) a second secure connection serving as a virtual private network tunnel between the client device and the network gateway, wherein said step (S108) further comprises the step of facilitating exchange (S108f) of a device-to-gateway pairwise master key, DG-PMK, between the client device and the network gateway.

2. The method according to claim 1, further comprising:
selectively allowing or denying (S106) traffic of the client device based on said SDN control signalling.

3. The method according to any one of claims 1 or 2, wherein establishing the second secure connection comprises:
receiving (S108a) an access request from the client device; and
forwarding (S108b) said access request to the network gateway.

4. A method for establishing a secure connection between a client device (40) and a network gateway (30), the method being performed by the network gateway, the method comprising the steps of:
establishing (S202) a first secure connection between an access point provided in a customer premises equipment and the network gateway;
defining a separate control channel between the access point and the network gateway;
receiving and sending (S104) software-defined networking, SDN, control signalling for the access point on the separate control channel, and
establishing (S204) a second secure connection with the access point to serve as a virtual private network tunnel between the client device and the network gateway, wherein said step (S204) further comprises the step of exchanging (S204a) a device-to-gateway pairwise master key, DG-PMK, with the client device via the access point.

5. The method according to claim 4, wherein establishing the second secure connection comprises:
performing (S204b) access authentication for the client device on behalf of the access point by sending an EAP-Request/Identity message to the client device via the access point.

6. The method according to claim 5, wherein performing said access authentication comprises:
encapsulating and decapsulating (S204c) EAP-Request/Response messages to RADIUS/Diameter Access-Request and Access-Challenge messages on behalf of the access point, and communicating said messages with an authentication server.

7. The method according to claim 6, wherein performing said access authentication comprises:
receiving (S204d) a RADIUS/Diameter Access-Accept message comprising a pairwise master key, PMK, from the authentication server on behalf of the access point.

8. An access point (20) for establishing a secure connection between a client device (40) and a network gateway (30), the access point being provided in a customer premises equipment, and comprising a processing unit (21), the processing unit being configured to:
establish (S102) a first secure connection between the access point and the network gateway, define a separate control channel between the access point and the network gateway;
receive and send (S104) software-defined networking, SDN, control signalling for the access point on the separate control channel, and
establish (S108) a second secure connection serving as a virtual private network tunnel between the client device and the network gateway, wherein said step (S108) further comprises the step of facilitating exchange (S108f) of a device-to-gateway pairwise master key, DG-PMK, between the client device and the network gateway.

9. A network gateway (30) for establishing a secure connection between a client device (40) and the network gateway, the network gateway comprising a processing unit (31), the processing unit being configured to:
establish (S202) a first secure connection between an access point provided in a customer premises equipment and the network gateway;
define a separate control channel between the access point and the network gateway;
receive and send (S104) software-defined networking, SDN, control signalling for the access point on the separate control channel, and
establish (S204) a second secure connection with the access point to serve as a virtual private network tunnel between the client device and the network gateway, wherein said step (S204) further comprises the step of exchanging (S204a) a device-to-gateway pairwise master key, DG-PMK, with the client device via the access point.

## Patentansprüche

1. Verfahren zum Aufbauen einer sicheren Verbindung zwischen einer Clientvorrichtung (40) und einem Netzwerkgateway (30), wobei das Verfahren durch einen Zugangspunkt (20) durchgeführt wird, der in einer Kundenstandorteinrichtung bereitgestellt wird, wobei das Verfahren die folgenden Schritte umfasst:
Aufbauen (S102) einer ersten sicheren Verbindung zwischen dem Zugangspunkt und dem Netzwerkgateway;
Definieren eines separaten Steuerkanals zwischen dem Zugangspunkt und dem Netzwerkgateway;
Empfangen und Senden (S104) einer softwaredefinierten Netzwerk(SDN)-Steuersignalisierung für den Zugangspunkt im separaten Steuerkanal und
Aufbauen (S108) einer zweiten sicheren Verbindung, die als ein virtueller privater Netzwerktunnel zwischen der Clientvorrichtung und dem Netzwerkgateway dient, wobei der Schritt (S108) ferner den Schritt des Ermöglichens eines Austauschs (S108f) eines paarweisen Vorrichtung-zu-Gateway-Masterschlüssels, DG-PMK, zwischen der Clientvorrichtung und dem Netzwerkgateway umfasst.

2. Verfahren nach Anspruch 1, das ferner Folgendes umfasst:
selektives Zulassen oder Zurückweisen (S106) von Verkehr der Clientvorrichtung auf Basis der SDN-Steuersignalisierung.

3. Verfahren nach einem der Ansprüche 1 oder 2, wobei das Aufbauen der zweiten sicheren Verbindung Folgendes umfasst:
Empfangen (S108a) einer Zugangsanforderung von der Clientvorrichtung; und Weiterleiten (S108b) der Zugangsanforderung zum Netzwerkgateway.

4. Verfahren zum Aufbauen einer sicheren Verbindung zwischen einer Clientvorrichtung (40) und einem Netzwerkgateway (30), wobei das Verfahren durch das Netzwerkgateway durchgeführt wird, wobei das Verfahren die folgenden Schritte umfasst:
Aufbauen (S202) einer ersten sicheren Verbindung zwischen einem Zugangspunkt, der in einer Kundenstandorteinrichtung bereitgestellt wird, und dem Netzwerkgateway;
Definieren eines separaten Steuerkanals zwischen dem Zugangspunkt und dem Netzwerkgateway;
Empfangen und Senden (S104) einer softwaredefinierten Netzwerk(SDN)-Steuersignalisierung für den Zugangspunkt im separaten Steuerkanal und
Aufbauen (S204) einer zweiten sicheren Verbindung mit dem Zugangspunkt, um als ein virtueller privater Netzwerktunnel zwischen der Clientvorrichtung und dem Netzwerkgateway zu dienen, wobei der Schritt (S204) ferner den Schritt des Austauschens (S204a) eines paarweisen Vorrichtung-zu-Gateway-Masterschlüssels, DG-PMK, via den Zugangspunkt mit der Clientvorrichtung umfasst.

5. Verfahren nach Anspruch 4, wobei das Aufbauen der zweiten sicheren Verbindung Folgendes umfasst:
Durchführen (S204b) einer Zugangsauthentifizierung für die Clientvorrichtung im Namen des Zugangspunkts durch Senden einer EAP-Anforderungs-/Identitätsnachricht via den Zugangspunkt an die Clientvorrichtung.

6. Verfahren nach Anspruch 5, wobei das Durchführen der Zugangsauthentifizierung Folgendes umfasst:
Kapseln und Entkapseln (S204c) von EAP-Anforderungs-/Antwortnachrichten in RADIUS/Diameter-Zugangsanforderungs- und -Zugangsabweisungsnachrichten im Namen des Zugangspunkts und Kommunizieren der Nachrichten mit einem Authentifizierungsserver.

7. Verfahren nach Anspruch 6, wobei das Durchführen der Zugangsauthentifizierung Folgendes umfasst:
Empfangen (S204d) einer RADIUS/Diameter-Zugangsakzeptanznachricht, die einen paarweisen Masterschlüssel, PMK, umfasst, im Namen des Zugangspunkts vom Authentifizierungsserver.

8. Zugangspunkt (20) zum Aufbauen einer sicheren Verbindung zwischen einer Clientvorrichtung (40) und einem Netzwerkgateway (30), wobei der Zugangspunkt in einer Kundenstandorteinrichtung bereitgestellt wird und eine Verarbeitungseinheit (21) umfasst, wobei die Verarbeitungseinheit zu Folgendem ausgelegt ist:
Aufbauen (S102) einer ersten sicheren Verbindung zwischen dem Zugangspunkt und dem Netzwerkgateway,
Definieren eines separaten Steuerkanals zwischen dem Zugangspunkt und dem Netzwerkgateway;
Empfangen und Senden (S104) einer softwaredefinierten Netzwerk(SDN)-Steuersignalisierung für den Zugangspunkt im separaten Steuerkanal und
Aufbauen (S108) einer zweiten sicheren Verbindung, die als ein virtueller privater Netzwerktunnel zwischen der Clientvorrichtung und dem Netzwerkgateway dient, wobei der Schritt (S108) ferner den Schritt des Ermöglichens eines Austauschs (S108f) eines paarweisen Vorrichtung-zu-Gateway-Masterschlüssels, DG-PMK, zwischen der Clientvorrichtung und dem Netzwerkgateway umfasst.

9. Netzwerkgateway (30) zum Aufbauen einer sicheren Verbindung zwischen einer Clientvorrichtung (40) und dem Netzwerkgateway, wobei das Netzwerkgateway eine Verarbeitungseinheit (31) umfasst, wobei die Verarbeitungseinheit zu Folgendem ausgelegt ist:
Aufbauen (S202) einer ersten sicheren Verbindung zwischen einem Zugangspunkt, der in einer Kundenstandorteinrichtung bereitgestellt wird, und dem Netzwerkgateway;
Definieren eines separaten Steuerkanals zwischen dem Zugangspunkt und dem Netzwerkgateway;
Empfangen und Senden (S104) einer softwaredefinierten Netzwerk(SDN)-Steuersignalisierung für den Zugangspunkt im separaten Steuerkanal und
Aufbauen (S204) einer zweiten sicheren Verbindung mit dem Zugangspunkt, um als ein virtueller privater Netzwerktunnel zwischen der Clientvorrichtung und dem Netzwerkgateway zu dienen, wobei der Schritt (S204) ferner den Schritt des Austauschens (S204a) eines paarweisen Vorrichtung-zu-Gateway-Masterschlüssels, DG-PMK, via den Zugangspunkt mit der Clientvorrichtung umfasst.

## Revendications

1. Procédé d'établissement d'une connexion sécurisée entre un dispositif client (40) et une passerelle de réseau (30), le procédé étant exécuté par un point d'accès (20) fourni dans un équipement des locaux d'abonné, le procédé comprenant les étapes ci-dessous consistant à :
établir (S102) une première connexion sécurisée entre le point d'accès et la passerelle de réseau ;
définir un canal de commande individuel entre le point d'accès et la passerelle de réseau ;
recevoir et envoyer (S104) une signalisation de commande de réseautage défini par logiciel, SDN, pour le point d'accès sur le canal de commande individuel ; et
établir (S108) une seconde connexion sécurisée servant de tunnel de réseau privé virtuel entre le dispositif client et la passerelle de réseau, dans lequel ladite étape d'établissement (S108) comprend en outre l'étape consistant à faciliter un échange (S108f) de clés principales jumelées de type « dispositif vers passerelle », DG-PMK, entre le dispositif client et la passerelle de réseau.

2. Procédé selon la revendication 1, comprenant en outre l'étape ci-dessous consistant à :
autoriser ou refuser, sélectivement, (S106), du trafic du dispositif client, sur la base de ladite signalisation de commande de réseautage SDN.

3. Procédé selon l'une quelconque des revendications 1 et 2, dans lequel l'étape d'établissement de la seconde connexion sécurisée comprend les étapes ci-dessous consistant à :
recevoir (S108a) une demande d'accès en provenance du dispositif client ; et
acheminer (S108b) ladite demande d'accès vers la passerelle de réseau.

4. Procédé d'établissement d'une connexion sécurisée entre un dispositif client (40) et une passerelle de réseau (30), le procédé étant mis en oeuvre par la passerelle de réseau, le procédé comprenant les étapes ci-dessous consistant à :
établir (S202) une première connexion sécurisée entre un point d'accès fourni dans un équipement des locaux d'abonné et la passerelle de réseau ;
définir un canal de commande individuel entre le point d'accès et la passerelle de réseau ;
recevoir et envoyer (S104) une signalisation de commande de réseautage défini par logiciel, SDN, pour le point d'accès sur le canal de commande individuel ; et
établir (S204) une seconde connexion sécurisée avec le point d'accès, destinée à servir de tunnel de réseau privé virtuel entre le dispositif client et la passerelle de réseau, dans lequel ladite étape d'établissement (S204) comprend en outre l'étape consistant à échanger (S204a) des clés principales jumelées de type « dispositif vers passerelle », DG-PMK, avec le dispositif client, par l'intermédiaire du point d'accès.

5. Procédé selon la revendication 4, dans lequel l'étape d'établissement de la seconde connexion sécurisée comprend l'étape ci-dessous consistant à :
mettre en oeuvre (S204b) une authentification d'accès pour le dispositif client, pour le compte du point d'accès, en envoyant un message d'identité/demande de protocole EAP « EAP-Request/Identity », au dispositif client, par l'intermédiaire du point d'accès.

6. Procédé selon la revendication 5, dans lequel l'étape de mise en oeuvre de ladite authentification d'accès comprend l'étape ci-dessous consistant à :
encapsuler et décapsuler (S204c) des messages de réponse/demande de protocole EAP « EAP-Request/Response » à des messages de défi d'accès « Access-Challenge » et à des messages de demande d'accès de protocole RADIUS/Diameter « RADIUS/Diameter Access-Request », pour le compte du point d'accès, et communiquer lesdits messages avec un serveur d'authentification.

7. Procédé selon la revendication 6, dans lequel l'étape de mise en oeuvre de ladite authentification d'accès comprend l'étape ci-dessous consistant à :
recevoir (S204d) un message d'acceptation d'accès de protocole RADIUS/Diameter « RADIUS/Diameter Access-Accept » comprenant des clés principales jumelées, PMK, en provenance du serveur d'authentification, pour le compte du point d'accès.

8. Point d'accès (20) destiné à établir une connexion sécurisée entre un dispositif client (40) et une passerelle de réseau (30), le point d'accès étant fourni dans un équipement des locaux d'abonné et comprenant une unité de traitement (21), l'unité de traitement étant configurée de manière à :
établir (S102) une première connexion sécurisée entre le point d'accès et la passerelle de réseau ;
définir un canal de commande individuel entre le point d'accès et la passerelle de réseau ;
recevoir et envoyer (S104) une signalisation de commande de réseautage défini par logiciel, SDN, pour le point d'accès sur le canal de commande individuel ; et
établir (S108) une seconde connexion sécurisée servant de tunnel de réseau privé virtuel entre le dispositif client et la passerelle de réseau, dans lequel ladite étape d'établissement (S108) comprend en outre l'étape consistant à faciliter un échange (S108f) de clés principales jumelées de type « dispositif vers passerelle », DG-PMK, entre le dispositif client et la passerelle de réseau.

9. Passerelle de réseau (30) destinée à établir une connexion sécurisée entre un dispositif client (40) et la passerelle de réseau, la passerelle de réseau comprenant une unité de traitement (31), l'unité de traitement étant configurée de manière à :
établir (S202) une première connexion sécurisée entre un point d'accès fourni dans un équipement des locaux d'abonné et la passerelle de réseau ;
définir un canal de commande individuel entre le point d'accès et la passerelle de réseau ;
recevoir et envoyer (S104) une signalisation de commande de réseautage défini par logiciel, SDN, pour le point d'accès sur le canal de commande individuel ; et
établir (S204) une seconde connexion sécurisée avec le point d'accès, destinée à servir de tunnel de réseau privé virtuel entre le dispositif client et la passerelle de réseau, dans lequel ladite étape d'établissement (S204) comprend en outre l'étape consistant à échanger (S204a) des clés principales jumelées de type « dispositif vers passerelle », DG-PMK, avec le dispositif client, par l'intermédiaire du point d'accès.
